# EUROPÄISCHE PATENTSCHRIFT

(11) **EP 2 251 258 B1**
(45) Veröffentlichungstag und Bekanntmachung des Hinweises auf die Patenterteilung: **14.11.2018**
(21) Anmeldenummer: 10004888.3
(22) Anmeldetag: 07.05.2010
(51) Int. Cl.: B64C 9/14, B64D 45/00, B64C 13/10

(54) **Flugzeughochauftriebssystem sowie Verfahren zur Ermittlung eines Betriebszustandes eines Flugzeughochauftriebssystems**
Aircraft high-lift system and method for determining the operational state of same
Système de hypersustentation d'aéronef et procédé de détermination de son état de fonctionnement

(30) Priorität: 12.05.2009 DE 102009020840
(43) Veröffentlichungstag der Anmeldung: 17.11.2010
(73) Patentinhaber: Liebherr-Aerospace Lindenberg GmbH, 88161 Lindenberg/Allgäu (DE)
(72) Erfinder: Schievelbusch, Bernd, 88161 Lindenberg (DE); Hauber, Bernhard, 88171 Weiler (DE)
(74) Vertreter: Laufhütte, Dieter

(56) Entgegenhaltungen:
- EP-A2- 1 637 453
- EP-A2- 2 039 605
- DE-B3- 10 308 301
- US-A- 5 686 907
- US-B1- 6 824 099

## Beschreibung

Die vorliegende Erfindung betrifft ein Flugzeughochauftriebssystem mit wenigstens einer Laststation zur Ansteuerung einer Klappe eines Flügels, vorzugsweise einer Landeklappe und/oder einer Vorflügelklappe, wenigstens einer Transmission mit Transmissionsabschnitten, die sich zwischen Abzweiggetrieben befinden, wobei mittels der Abzweiggetriebe Stellenergie von der Transmission an die Laststation abzweigbar ist sowie ein Verfahren zur Ermittlung eines Betriebszustandes eines Flugzeughochauftriebssystems.

Flugzeughochauftriebssysteme, die Flügelklappen wie Landeklappen und Vorflügelklappen des Flugzeugs ansteuern und bewegen, können in unzulässige Betriebszustände bzw. Fehlerzustände geraten. Aus Sicherheitsgründen ist es notwendig, diese unzulässigen Betriebszustände möglichst unverzüglich zu erkennen und vorzugsweise direkt an den Flugzeugführer weiterzugeben.

Unzulässige Betriebszustände können beispielsweise aus
- einer Unterbrechung des Lastpfades einer Antriebsstation einer Flügelklappe ("disconnect"),
- einer Unterbrechung in der Transmission des Flugzeughochauftriebssystems,
- einem Klemmen von Elementen des Lastpfades einer Antriebsstation ("jam"),
- einem Klemmen in der Transmission und/oder
- einem Schieflauf eines Klappenkörpers ("skew")
   resultieren.

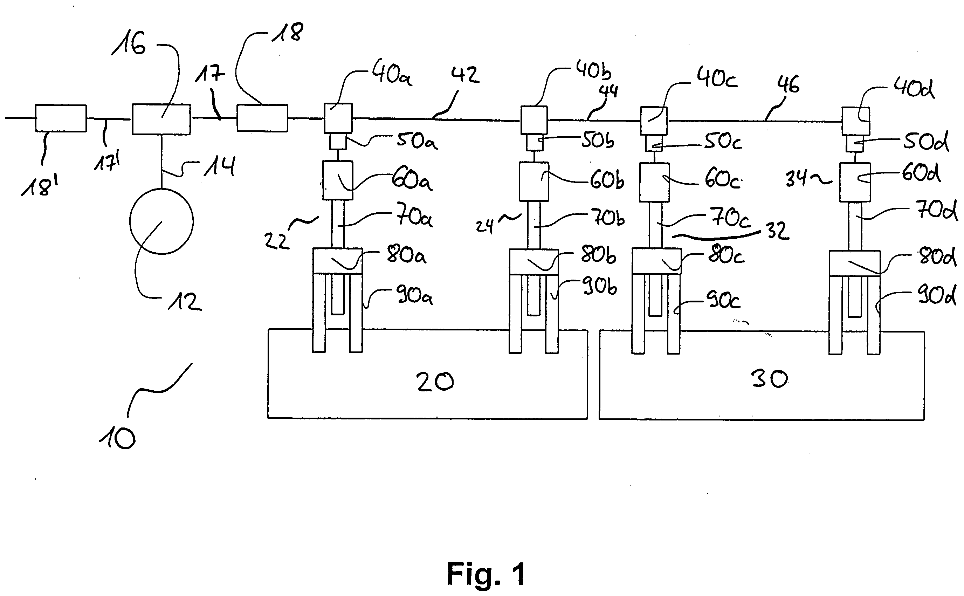

Aus dem Stand der Technik bekannte Flugzeughochauftriebssysteme, wie schematisch in Figur 1 dargestellt, setzen beispielsweise zur Vermeidung von unzulässigen Lasten im Klemmfall ("jam") mechanische Drehmomentbegrenzer 18 ein.

Aus der DE 103 08 301 B3 ist ein Flugzeughochauftriebssystem mit einer Überlastsicherung bekannt, das ein Antriebssystem und Elemente zum Übertragen der Antriebsenergie über die gesamte Spannweite an Antriebsstationen einzelner Segmente von LandeklappenNorflügelklappensystemen aufweist. Die Überlastsicherung besteht dabei aus am Ausgang der jeweiligen Antriebsstation bzw. der Stellgetriebe für die Landeklappen bzw. Vorflügelklappen angeordneten Kraftsensoren wie Dehnmessstreifen und/oder Kraftmessdosen. Klemmfälle im Stellgetriebe und/oder in der Transmission sind mit diesem System jedoch nicht detektierbar.

Die US 2006/0060719 A1 betrifft ein Flugzeughochauftriebssystem mit einer Antriebseinheit, Elementen zum Übertragen der Antriebsenergie an Antriebsstationen einzelner Segmente von Landeklappen-Norflügelklappensystemen sowie mit einer Überlastsicherung, wobei die Überlastsicherung wenigstens einen elektrischen Überlastsensor aufweist, der im Antriebsstrang zwischen der Antriebseinheit und einer Abtriebsstation angeordnet ist.

Ebenfalls bekannt ist die US 6,824,099 B1, die den nächstliegenden Stand der Technik darstellt und den Oberbegriff des 1. Anspruchs offenbart. Allen bekannten Systemen ist gemein, dass eine Unterbrechung des Lastpfades; lediglich indirekt über das Ansprechen eines Drehmomentbegrenzers oder anhand des resultierenden, offensichtlichen Schieflaufs einer Klappe detektiert werden. Je nach Auslegung der Strukturbauteile und der Antriebs- und Führungselemente kann der Fehler auch bis zum nächsten Wartungsintervall unentdeckt bleiben.

Ferner kann eine Lokalisierung des Fehlerortes bei den bekannten Flugzeughochauftriebssystemen mit mechanischem Drehmomentbegrenzer in der Regel nur durch Sichtprüfung der mechanischen Anzeigen an den Lastbegrenzern erfolgen. Wünschenswert wäre es jedoch, wenn eine Lokalisierung des Fehlerortes direkt möglich wäre.

Es ist daher die Aufgabe der vorliegenden Erfindung, ein Flugzeughochauftriebssystem der eingangs genannten Art in vorteilhafter Weise weiterzubilden, insbesondere dahingehend, dass dieses einfacher und leichter durch Verzicht auf schwere und komplexe Komponenten aufgebaut ist und eine Lokalisierung des Fehlerortes unabhängig davon, wo der Fehlerort im System befindlich ist, also auch eine Ermittlung von Fehlern im Stellgetriebe und/oder in der Transmission, ermöglicht.

Diese Aufgabe wird erfindungsgemäß durch ein Flugzeughochauftriebssystem mit den Merkmalen des Anspruchs 1 gelöst.

Dadurch ergibt sich der Vorteil, dass ein einfacher Aufbau des Flugzeughochauftriebssystem möglich wird. Zugleich wird eine Lokalisierung eines möglichen Fehlers erleichtert, da ohne weiteres anhand der Zuordnung des Signals zum Erfassungsmittel, das seinerseits hinsichtlich seiner Anordnung bekannt ist, der Fehlerort innerhalb des System übermittelt wird. Besonders vorteilhaft ist ferner, dass der Fehler und auch der Fehlerort unmittelbar an den Flugzeugführer übermittelt werden können.

Erfindungsgemäß ist mittels des Erfassungsmittels das anliegende Drehmoment und/oder der zeitliche Verlauf des Drehmoments erfassbar. Des Weiteren kann vorgesehen sein, dass das Erfassungsmittel ein Drehmomentsensor ist. Dadurch ergibt sich der Vorteil, die gut auswertbare Kenngröße Drehmoment bzw. Drehmomentverlauf zur Ermittlung des Betriebszustandes und entsprechend auch für fehlerhafte Betriebszustände nutzen zu können. Beispielsweise ist es möglich, im Flugzeughochauftriebssystem in geeigneten Mitteln Referenzwerte und/oder -kurven bzw. -muster vorzuhalten, die mit aktuellen Werten abgeglichen werden können. Durch eine derartige mittelbare Auswertung können bereits mit einer geringen Anzahl von Erfassungsmitteln detaillierte Rückschlüsse auf den Betriebszustand ermöglicht werden. Auch kann anhand der Referenzwerte und/oder -kurven bzw. -muster mit bereits nur einem einzigen Erfassungsmittel eine detaillierte Aussage hinsichtlich Fehlerart und Fehlerort zu einer und/oder beiden Laststationen einer Klappe ermöglicht werden.

Denkbar ist ferner, dass kein mechanischer Drehmomentbegrenzer vorhanden ist, insbesondere dass kein mechanischer Drehmomentbegrenzer abtriebsseitig eines von einer zentralen Antriebseinheit bereitgestellten Stellenergie verzweigenden Verteilergetriebes in der Transmission vorhanden ist und/oder dass kein mechanischer Drehmomentbegrenzer in einer Laststation vorhanden ist. Dadurch ergibt sich der Vorteil, dass das Flugzeughochauftriebssystem leichter und einfacher aufgebaut werden kann. Durch den Wegfall der hochkomplexen und schweren Komponenten werden die Gestehungskosten, aber auch die Wartungskosten gesenkt, da der Wartungsbedarf zusätzlich reduziert werden kann.

Darüber hinaus ist denkbar, dass eine Auswerteeinheit vorgesehen ist, die mit dem wenigstens einen Erfassungsmittel in Signalverbindung steht und mittels derer die Signale des Erfassungsmittels auswertbar sind, um einen Betriebszustand zu ermitteln. Vorteilhafterweise sind Referenzwerte und/oder -kurve bzw. -muster bezüglich korrekter Betriebszustände und fehlerhafter Betriebszustände in der Auswerteeinheit hinterlegt oder durch die Auswerteeinheit abrufbar. Denkbar ist ferner, dass die Auswerteeinheit ihre Ermittlungsergebnisse protokolliert und in einem Speicher ablegt. Ferner kann die Auswerteeinheit dem Flugzeugführer die aktuellen Betriebszustände übermitteln und auch gegebenenfalls bei fehlerhaften Betriebszuständen über eine Ausgabeeinheit wie einen Monitor oder ein Kontrollinstrument im Cockpit Warnungen ausgeben.

Des Weiteren kann vorgesehen sein, dass die Auswerteeinheit eine zentrale Auswerteeinheit ist, die mit sämtlichen Erfassungsmitteln des Flugzeughochauftriebssystems in Signalverbindung steht. So können vorteilhafterweise die Informationen von den Erfassungsmitteln des linken und des rechten Flügels gemeinsam in der zentralen Auswerteeinheit ausgewertet werden.

Möglich ist weiter, dass eine Laststation einen Stationsaktuator und eine Spindel mit einer Spindelmutter aufweist, wobei der Stationsaktuator das Stellmoment zu der Spindel überträgt sowie übersetzt und die Spindelmutter die rotatorische Bewegung in eine translatorische Bewegung für die Klappe wandelt, und dass ein Erfassungsmittel in der Laststation vor dem Stationsaktuator angeordnet ist.

Außerdem kann vorgesehen sein, dass der Transmissionsabschnitt ein Transmissionsabschnitt zwischen den Abzweiggetrieben zweier einer Klappe zugeordneter Laststationen ist.

Denkbar ist ferner, dass mittels des in diesem Transmissionsabschnitt angeordneten Erfassungsmittels das dort anliegende Drehmoment und/oder der zeitliche Verlauf des Drehmoments ermittelbar ist.

Es kann vorteilhafterweise vorgesehen sein, dass anhand der Überwachung des Verhältnisses der Lastanteile der Laststationen fehlerhafte Betriebszustände mittels der Auswerteeinheit ermittelbar sind und/oder dass anhand der Überwachung und des paarweisen Vergleichs der anliegenden Stellkräfte an den Laststationen des linken und rechten Flügels des Flugzeugs fehlerhafte Betriebszustände mittels der Auswerteeinheit ermittelbar sind und/oder dass unter Einbeziehung der aktuellen Werte für Flügelkonfiguration, des Flugzeuggewichts, der Fluggeschwindigkeit und/oder der Temperatur ein Sollwert für die anliegende Stellkraft an den Laststationen mittels der Auswerteeinheit ermittelbar ist und dass anhand eines Abgleichs der ermittelten Istwerte mit den errechneten Sollwerten fehlerhafte Betriebszustände mittels der Auswerteeinheit ermittelbar sind.

Von Vorteil ist es insbesondere, wenn durch mittelbaren und/oder unmittelbaren Vergleich der Lastanteile zweier Laststationen
- ein Klemmfall in einer der Laststationen zweier einer Klappe zugeordneter Laststationen anhand eines ansteigenden Betriebsdrehmoments in der ersten der Klappe zugeordneten Laststation bei gleichbleibenden Betriebsdrehmoment der zweiten der Klappe zugeordneten Laststation und/oder
- eine Unterbrechung eines Lastpfades in einer ersten einer Klappe zugeordneten Laststation anhand des Anliegens der gesamten Last am intakten Lastpfad der zweiten der Klappe zugeordneten Laststation und/oder
- ein Schieflauf der Klappe nach einer Unterbrechung oder eines Sprunges im zeitlichen Verlauf des anliegenden Drehmoments in einer der Klappe zugeordneten Laststation und/oder
- eine Unterbrechung im Transmissionsabschnitt zwischen den Klappen anhand eines Drehmomentabfalls an beiden Laststationen unter Hinzuziehung wenigstens eines Signals von Positionsmessmitteln zur Ermittlung der Klappenstellung und/oder
- eine Unterbrechung des Transmissionsabschnitts zwischen den Laststationen der äußeren Klappe anhand der Reaktion der innenliegenden Laststation und/oder
- eine Unterbrechung des Transmissionsabschnitts zwischen den Laststationen der inneren Klappe anhand einer Änderung der Verhältnisses der Lastanteile der Laststationen der inneren und äußeren Klappe
mittels der Auswerteeinheit ermittelbar ist.

Des Weiteren betrifft die vorliegende Erfindung ein Verfahren zur Ermittlung eines Betriebszustandes eines Flugzeughochauftriebssystems mit den Merkmalen des Anspruchs 11.

Weiter ist denkbar, dass anhand der Überwachung und des paarweisen Vergleichs der anliegenden Stellkräfte an den Laststationen des linken und rechten Flügels des Flugzeugs fehlerhafte Betriebszustände und/oder dass unter Einbeziehung der aktuellen Werte für die Flügelkonfiguration, des Flugzeuggewichts, der Fluggeschwindigkeit und/oder der Temperatur ein Sollwert für die anliegende Stellkraft an den Laststationen ermittelt werden und dass anhand eines Abgleichs der ermittelten Istwerte mit den errechneten Sollwerten fehlerhafte Betriebszustände ermittelt werden.

Darüber hinaus kann vorgesehen sein, dass anhand der Überwachung des Verhältnisses der Lastanteile der Laststationen fehlerhafte Betriebszustände ermittelt werden.

Möglich ist des Weiteren, dass durch mittelbaren und/oder unmittelbaren Vergleich der Lastanteile zweier Laststationen
- ein Klemmfall in einer der Laststationen zweier einer Klappe zugeordneter Laststationen anhand eines ansteigenden Betriebsdrehmoments in der ersten der Klappe zugeordneten Laststation bei gleichbleibenden Betriebsdrehmoment der zweiten der Klappe zugeordneten Laststation und/oder
- eine Unterbrechung eines Lastpfades in einer ersten einer Klappe zugeordneten Laststation anhand des Anliegens der gesamten Last am intakten Lastpfad der zweiten der Klappe zugeordneten Laststation und/oder
- ein Schieflauf der Klappe nach einer Unterbrechung oder eines Sprunges im zeitlichen Verlauf des anliegenden Drehmoments in einer der Klappe zugeordneten Laststation und/oder
- eine Unterbrechung im Transmissionsabschnitt zwischen den Klappen anhand eines Drehmomentabfalls an beiden Laststationen unter Hinzuziehung wenigstens eines Signals von Positionsmessmitteln zur Ermittlung der Klappenstellung und/oder
- eine Unterbrechung des Transmissionsabschnitts zwischen den Laststationen der äußeren Klappe anhand der Reaktion der innenliegenden Laststation und/oder
- eine Unterbrechung des Transmissionsabschnitts zwischen den Laststationen der inneren Klappe anhand einer Änderung der Verhältnisses der Lastanteile der Laststationen der inneren und äußeren Klappe
ermittelt wird.

Von Vorteil ist es, wenn das Verfahren mit einem Flugzeughochauftriebssystem nach einem der Ansprüche 1 bis 10 durchgeführt wird.

Weitere Einzelheiten und Vorteile der Erfindung sollen nun anhand eines in der Zeichnung dargestellten Ausführungsbeispiels näher erläutert werden.

Es zeigen:
- Fig. 1:: ein bekanntes Flugzeughochauftriebssystem in schematischer Darstellung;
- Fig. 2:: ein Flugzeughochauftriebssystems in schematischer Darstellung in einer ersten, nicht beanspruchten Ausführungsform; und
- Fig. 3:: ein erfindungsgemäßes Flugzeughochauftriebssystems in schematischer Darstellung in einer zweiten, beanspruchten Ausführungsform.

Figur 1 zeigt ein bekanntes Flugzeughochauftriebssystem 10 in schematischer Darstellung. Dabei weist das Flugzeughochauftriebssystem 10 eine zentrale Antriebseinheit 12 auf, mittels derer elektrische oder hydraulische Energie der Flugzeugversorgung in mechanische Stellenergie gewandelt wird. Mittels nicht näher dargestellter Bremsmittel kann das Flugzeughochauftriebssystem in Position gehalten werden.

Die zentrale Antriebseinheit 12 überträgt über eine Zentralwelle 14 die Stellenergie von der zentralen Antriebseinheit 12 an ein Verteilergetriebe 16, dass die Stellenergie auf die Transmission 17 des rechten Flügels und die Transmission 17' des linken Flügels verteilt. Der Aufbau des Flugzeughochauftriebssystems ist im in Figur 1 gezeigten Ausführungsbeispiel im Wesentlichen nur für den rechten Flügel dargestellt.

Abtriebsseitig des Verteilergetriebes 16 ist jeweils ein Drehmomentbegrenzer 18, 18' vorgesehen, der bei Überlast den Antrieb blockiert und das Stellmoment in die nicht näher dargestellte Tragstruktur, insbesondere in Tragstruktur der Transmission 17 im Rumpf und/oder Flügel ableitet.

Abtriebsseitig des Drehmomentbegrenzers 18 sind in der Transmission 17 Abzweiggetriebe 40a, 40b, 40c, 40d angeordnet, die vorzugsweise baugleich sind. Dabei sind die Abzweiggetriebe 40a und 40b der rechten inneren Landeklappe 20 und die Abzweiggetriebe 40c und 40d der rechten äußeren Landeklappe 30 zugeordnet.

Jeder Landeklappe 20 und 30 sind jeweils zwei im Wesentlichen vorzugsweise baugleich aufgebaute Laststationen 22, 24, 32, 34 zugeordnet. Im Einzelnen sind die Laststationen 22 und 24 der inneren rechten Landeklappe 20 und die Laststationen 32 und 34 der rechten äußeren Landeklappe 30 zugeordnet. Die Abzweiggetriebe 40a, 40b, 40c, 40d entnehmen der Transmission 17 die jeweils benötigte Stellenergie für die dem jeweiligen Abzweiggetriebe 40a, 40b, 40c, 40d zugeordnete Laststation 22, 24, 32, 34.

Zwischen den Abzweiggetrieben 40a und 40b befindet sich ein erster Transmissionsabschnitt 42, zwischen den Abzweiggetrieben 40b und 40c befindet sich ein zweiter Transmissionsabschnitt 44 und zwischen Abzweiggetrieben 40c und 40d befindet sich ein dritter Transmissionsabschnitt 46. Dabei sind der erste und der dritte Transmissionsabschnitt 42 und 46 Abschnitte der Transmission 17, die zwischen den Abzweiggetrieben 40a und 40b bzw. 40c und 40d liegen, die jeweils einer Landeklappe 20, 30 zugeordnet sind.

Dabei sind die Transmissionsabschnitte 42, 44, 46 der Transmission 17 vorzugsweise, insbesondere aus Sicherheitsgründen, derart entkoppelt angeordnet und ausgeführt, dass jede Laststation 22, 24, 32, 34 jeweils unabhängig vom Zustand der übrigen Laststationen mit Stellenergie versorgt werden kann.

Nach dem Abzweiggetriebe 40a, 40b, 40c, 40d ist ein Stationsdrehmomentbegrenzer 50a, 50b, 50c, 50d vorgesehen, der im Fehlerfall das übertragene Stellmoment begrenzt und somit Schäden an der Laststation verhindern kann. Abtriebsseitig der Stationsdrehmomentbegrenzer 50a, 50b, 50c, 50d ist ein Stationsaktuator 60a, 60b, 60c, 60d vorgesehen, der das Stellmoment übersetzt und an die Spindel 70a, 70b, 70c, 70d überträgt.

Die Spindel 70a, 70b, 70c, 70d überträgt die Stellenergie zur Spindelmutter 80a, 80b, 80c, 80d, die ihrerseits die an sie übertragene rotatorische Bewegung in eine translatorische Bewegung wandelt. Über das Führungsgetriebe 90a, 90b, 90c, 90d wird diese translatorische Bewegung bzw. die dadurch übertragene Stellenergie jeweils an die Klappen 20 und 30 weitergegeben und der kinematische Verlauf der Klappenbewegung bestimmt.

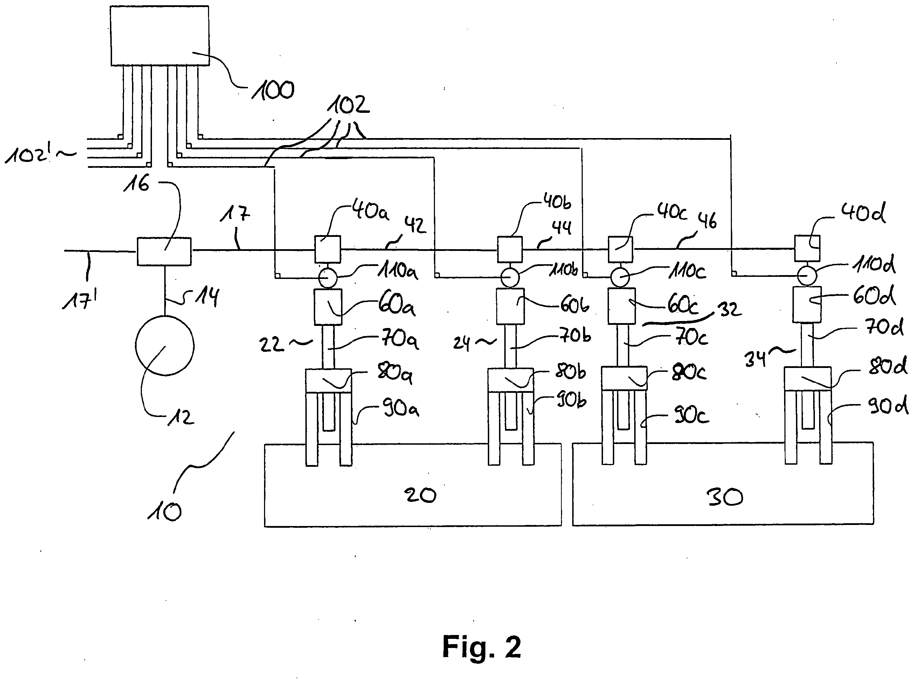

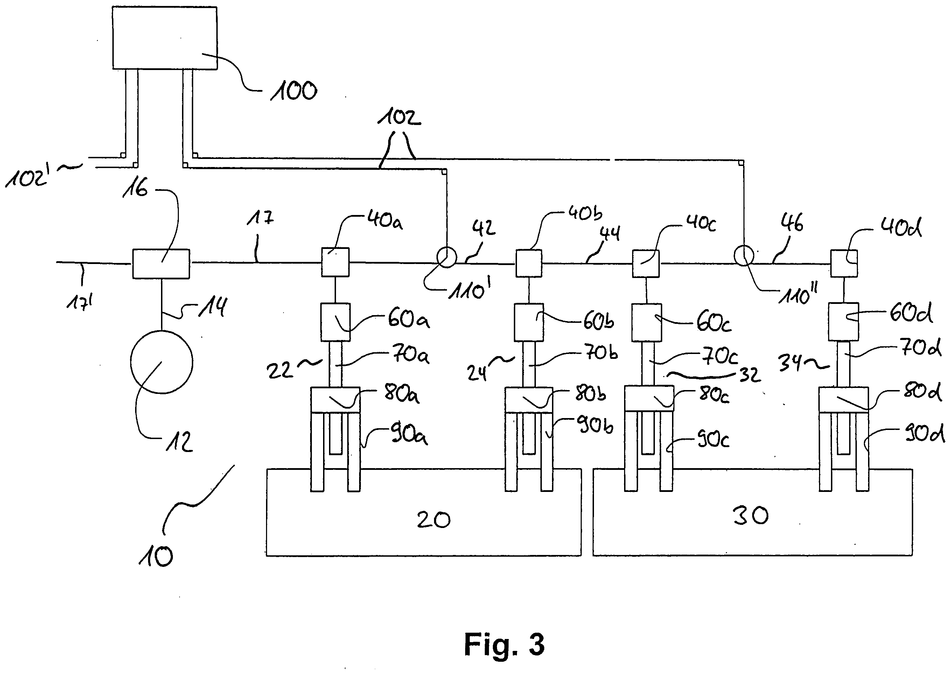

In den Figuren 2 und 3 sind ein erstes und ein zweites Ausführungsbeispiels für ein Flugzeughochauftriebssystem dargestellt. Vergleichbare Komponenten sind dabei mit den gleichen Bezugszeichen aus Figur 1 versehen.

Bei dem in Figur 2 bzw. dem in Figur 3 dargestellten Ausführungsbeispiel eines Flugzeughochauftriebssystems 10 fehlen die bei dem in Figur 1 dargestellten Flugzeughochauftriebssystem 10 vorhandenen Stationsdrehmomentbegrenzer 50a, 50b, 50c, 50d sowie der Systemdrehmomentbegrenzer 18.
Bei dem Ausführungsbeispiel gemäß Figur 2 sind jeweils abtriebsseitig der Abzweiggetriebe 40a, 40b, 40c, 40d und vor den Stationsaktuatoren 60a, 60b, 60c, 60d bzw. Getrieben 60a, 60b, 60c, 60d an der Eingangswelle der jeweiligen Laststation 22, 24, 32, 34 als Lastsensoren bzw. Drehmomentsensoren 110a, 110b, 110c, 110d ausgeführte Erfassungsmittel 110a, 110b, 110c, 110d angeordnet. Mittels der Lastsensoren bzw. Drehmomentsensoren 110a, 110b, 110c, 110d kann das anliegende Drehmoment und damit auch der tatsächliche Drehmomentverlauf erfasst werden. Entsprechende Signale werden über die Signalleitungen 102 an die elektronische Auswerteeinheit 100 weitergeleitet. Zum nicht dargestellten linken Flügel führen Signalleitungen 102'.

Bei dem erfindungsgemäßen Ausführungsbeispiel gemäß Figur 3 sind jeweils zwischen einzelnen Laststationen 22, 24 bzw. 32, 34 der Klappen 20, 30 Lastsensoren 110' und 110" vorgesehen, die über Signalleitungen 102 mit der Auswerteeinheit 100 in Signalverbindung stehen.
Der der inneren rechten Klappe 20 zugeordnete Lastsensor 110' ist dabei an der Transmissionswelle 42 bzw. dem Transmissionsabschnitt 42 zwischen den Laststationen 22 und 24 angeordnet, während der der äußeren rechten Klappe 30 zugeordnete Lastsensor 110" an der Transmissionswelle 46 bzw. dem Transmissionsabschnitt 46 zwischen den Laststationen 32 und 34 angeordnet ist.

Somit wird vorteilhafterweise nur ein Sensor 110' bzw. 110" pro Klappe 20, 30 benötigt, so dass die Anzahl der benötigten Sensoren 110', 110" für ein Flugzeughochauftriebssystem 10 vorteilhafterweise im Vergleich zu bisher bekannten System halbiert werden kann. Grundsätzlich können jedoch z. B. aus Redundanzgründen ein oder mehrere zusätzliche Sensoren vorgesehen sein.

Sämtliche in Bezug auf Figur 2 beschriebenen Verfahren zur Fehlererkennung können entsprechend auch mit dem in Figur 3 dargestellten Flugzeughochauftriebssystem, insbesondere mittels der Auswerteeinheit 100 durchgeführt werden, ebenso können bei beiden Systemen gemäß Figur 2 und 3 anstelle der Spindeln 70a, 70b, 70c, 70d auch Rotationsaktuatoren eingesetzt werden.

Bei fehlerfreiem Betrieb überträgt jede Laststation 22, 24, 32, 34 einen bestimmten Anteil der an der Klappe 20, 30 wirkenden Windlast. Dieser Lastanteil ist durch die Geometrie der Klappe 20, 30 und die aerodynamische Lastverteilung vorgegeben und verändert sind nur im Fehlerfall. Unter Berücksichtigung dieser Umstände ist somit eine Möglichkeit der Fehlerdetektierung durch die Überwachung des Verhältnisses der Lastanteile der einer Klappe 20, 30 zugeordneten Laststationen 22, 24, 32, 34 bzw. deren Komponenten möglich. Zur Überwachung der Lastanteile der einer Klappe 20, 30 zugeordneten Laststationen 22, 24, 32, 34 bzw. deren Komponenten kann folgendermaßen verfahren werden:
- Bei Auftreten eines Klemmfalles in einer Laststation 22, 24, 32, 34, auch "jam" genannt, wird das Betriebsdrehmoment der fehlerhaften Laststation 22, 24, 32, 34 vergleichsweise stark ansteigen, während der Lastanteil des intakten Lastpfades sich nicht ändert. Damit kann das Auftreten eines Klemmfalles eindeutig mittels der Auswerteeinheit 100 detektiert werden.
- Im Falle einer Unterbrechung des Lastpfades innerhalb einer ersten Laststation, auch "disconnect" genannt, beispielsweise bei der rechten inneren Klappe 20 die Laststation 22, wird über diesen Pfad keine Last mehr übertragen, während der intakte Lastpfad, beispielsweise bei der rechten inneren Klappe 20 die Laststation 24, nunmehr die gesamte Last tragen muss. Damit kann das Auftreten dieses Fehlerfalls eindeutig mittels der Auswerteeinheit 100 detektiert werden.

Bei dem in Figur 2 gezeigten Ausführungsbeispiel ist dies unmittelbar über das Signal der Lastsensoren 110a, 110b, 110c, 110d erfassbar. Bei dem in Figur 3 gezeigten Ausführungsbeispiel kann dieser Fehlerfall mittelbar über den veränderten zeitlichen Verlauf z. B. des Drehmoments insbesondere innerhalb der Transmissionsabschnitte 42 und 46, der beispielsweise durch Abgleich gegen Referenzkurven durch die Auswerteeinheit 100 festgestellt werden kann, festgestellt werden.
- Der Fehlerfall "Schieflauf einer Klappe", auch "skew" genannt, tritt nur nach einer Unterbrechung des Lastpfades auf und damit ebenfalls durch die Auswerteeinheit 100 detektierbar. Denn mittels der Auswerteeinheit 100 und der Lastsensoren 110a, 110b, 110c, 110d bzw. 110', 110" kann der zeitliche Verlauf des Drehmoments in einer Laststation 22, 24, 32, 34 überwacht werden, so dass eine Unterbrechung des Lastpfades unmittelbar erfasst wird.

Bei dem in Figur 2 gezeigten Ausführungsbeispiel ist dies unmittelbar über das Signal der Lastsensoren 110a, 110b, 110c, 110d erfassbar. Bei dem in Figur 3 gezeigten Ausführungsbeispiel kann dieser Fehlerfall mittelbar über den veränderten zeitlichen Verlauf z. B. des Drehmoments insbesondere innerhalb der Transmissionsabschnitte 42 und 46, der beispielsweise durch Abgleich gegen Referenzkurven durch die Auswerteeinheit 100 festgestellt werden kann, ermittelt werden.
- Bei einem durch Unterbrechung der Transmission im Transmissionsabschnitt 44 zwischen den Klappen 20 und 30 wird die vom Antrieb abgetrennte Klappe 20 oder 30 von der Windlast zurückgestellt. Beide Drehmomentsensoren 110a und 110 b bzw. 110c und 110d gemäß dem in Figur 2 dargestellten Ausführungsbeispiel messen keine Last mehr. Bei dem in Figur 3 dargestellten Ausführungsbeispiel misst der der vom Antrieb abgetrennten Klappe 20 oder 30 zugeordnete Lastsensor 110' und/oder 110" keine Last mehr.

Dieser Fehlerfall kann z. B. durch nicht näher dargestellte Positionssensoren erfasst werden, die vorzugsweise mit der Auswerteeinheit 100 in Verbindung stehen.

Alternativ oder zusätzlich kann folgendermaßen verfahren werden:
Eine Unterbrechung der Transmission 17 zwischen den Aktuatoren der äußeren Klappe, z. B. im Transmissionsabschnitt 44 und/oder 46 wird wie eine Unterbrechung des Lastpfades (siehe oben) erkannt, weil die Klappenlasten nur noch von den Laststationen 22, 24 der inneren Klappe 20 reagiert werden.

Eine Unterbrechung der Transmission zwischen den Aktuatoren der inneren Klappe 20 im Abschnitt 42 wird ebenfalls eindeutig durch die Auswerteeinheit 100 erkannt, weil bei diesem Fehlerfall der Lastanteil der äußeren Klappe 30 über die Aktuatoren der inneren Klappe 20 auf die Klappenstruktur übertragen wird, die in diesem Fall als zweiter Lastpfad dient. In diesem Zustand verläuft die gesamte Antriebsleistung des Halbflügels über den inneren Aktuator 22 der inneren Klappe 20, während der äußere Aktuator 24 der inneren Klappe 20 nur die Transmission der äußeren Klappe 30 stützt. Das Verhältnis der Aktuatorenlasten ist damit deutlich verändert und kann damit eindeutig diesem Fehlerfall zugeordnet werden.

Von Vorteil ist insbesondere, dass durch die Sensoren 110a, 110b, 110c, 110d bzw. 110', 110" und das durch sie übermittelte Signal zugleich auch der Fehlerort detektiert wird. Eine aufwändige Suche durch das Wartungspersonal entfällt somit.

Ein Klemmfall in der Transmission 17 kann beispielsweise durch nicht näher dargestellte Überlastschutzvorrichtungen erkannt werden, bei denen z. B. Sensoren das in der Transmission anliegende Drehmoment überwachen.

Zur Überwachung der Lasten der Laststationen 22, 24, 32, 34 des rechten und linken Flügels kann weiter folgendermaßen vorgegangen werden:
Bei ungestörtem Geradeausflug sind die Windlasten an den Klappen 20, 30 des rechten und linken Flügels gleich groß. Da die Antriebssysteme der Klappen 20, 30 achsensymmetrisch zur Flugzeuglängsachse sein, entstehen an den Laststationen links und rechts an den gleichen Positionen auch gleiche Stellkräfte, die über die Lastsensoren erfasst werden und in einer elektronischen Auswerteeinheit paarweise verglichen werden. Anhand dieser Kriterien kann mittels der Auswerteeinheit 100 zusätzlich erkannt werden, ob eine Unterbrechung des Lastpfades einer Antriebsstation bzw. Laststation 22, 24, 32, 34, eine Unterbrechung in der Transmission 17, 17' ein Klemmen von Elementen des Lastpfades einer Antriebsstation, ein Klemmen in der Transmission 17, 17' und/oder ein Schieflauf eines Klappenkörpers 20, 30 vorliegt.

Dabei ist vorgesehen, Einflüsse auf die Klappen 20, 30 des rechten und linken Flügels zu berücksichtigen, die eine unsymmetrische Belastung der Klappen 20, 30 verursachen. Hierzu zählt insbesondere der einseitige Einsatz von einem Spoiler wie einem Rollspoiler, aber auch die Einwirkung von Böen, Schiebeflug, Kurvenflug, Seitenwind oder Einflug in Wirbelschleppen z. B. eines vorausfliegenden Flugzeugs. Diese Einflüsse sind in der Regel zeitlich begrenzt und daher ausfilterbar.

Ferner ist es zusätzlich möglich, mittels eines Vergleichs der Soll- und Istwerte der Lasten eine Fehlerkennung zu betreiben bzw. zu unterstützen:
Hierzu wird aus den Werten für die Konfiguration des Flügels wie dem Klappenwinkel, dem Flugzeuggewicht, der Fluggeschwindigkeit, der Temperatur usw. ein Sollwert für jede Laststation 22, 24, 32, 34 mittels der Auswerteeinheit 100 errechnet und mit dem gemessenen Istwert verglichen. Bei signifikanten Abweichungen, die z. B. mittels entsprechender Grenzwerte detektierbar sind, wird einer der vorstehend beschriebenen Fehlerfälle erkannt. Jedem Fehlerfall sind dabei ein oder mehrere Grenzwerte zugeordnet, bei deren Über- oder Unterschreitung seitens der Auswerteeinheit ein Fehlerfall eindeutig erkannt wird.

Der Aufbau des linken Teils des erfindungsgemäßen Flugzeughochauftriebssystems 10 ist im Wesentlichen entsprechend baugleich ausgeführt, wie in den Figuren 2 und 3 dargestellt. Grundsätzlich ist jedoch ebenfalls denkbar, für den linken und den rechten Flügel voneinander unabhängige Flugzeughochauftriebssysteme 10 vorzusehen, wie sie in den Figuren 2 oder 3 gezeigt sind.

Weiter ist grundsätzlich denkbar, ein Flugzeughochauftriebssystem 10 derart aufzuführen, dass es eine Kombination der in Figur 2 und 3 dargestellten Systeme ist, also sowohl die Drehmomentsensoren 110a, 110b, 110c, 110d und 110', 110" mit den in Figur 2 und 3 gezeigten Anordnungen aufweist.

## Patentansprüche

1. Flugzeughochauftriebssystem (10) mit wenigstens einer Laststation (22, 24, 32, 34) zur Ansteuerung einer Klappe (20, 30) eines Flügels, vorzugsweise einer Landeklappe und/oder einer Vorflügelklappe, und wenigstens einer Transmission (17) mit Transmissionsabschnitten (42, 44, 46), die sich zwischen Abzweiggetrieben (40a, 40b, 40c, 40d) befinden, wobei mittels der Abzweiggetriebe (40a, 40b, 40c, 40d) Stellenergie von der Transmission (17) an die Laststation (22, 24, 32, 34) abzweigbar ist,
**dadurch gekennzeichnet,**
**dass** wenigstens ein Erfassungsmittel (110', 110") in einem Transmissionsabschnitt (42, 46) angeordnet ist, mittels dessen ein Betriebszustand der Transmission (17) und/oder der Laststation (22, 24, 32, 34) mittelbar und/oder unmittelbar ermittelbar ist, wobei mittels des Erfassungsmittels (110', 110") das anliegende Drehmoment und/oder der zeitliche Verlauf des Drehmoments erfassbar ist .

2. Flugzeughochauftriebssystem (10) nach Anspruch 1, **dadurch gekennzeichnet, dass** das Erfassungsmittel (110', 110") ein Drehmomentsensor ist.

3. Flugzeughochauftriebssystem (10) nach Anspruch 1 oder 2, **dadurch gekennzeichnet, dass** kein mechanischer Drehmomentbegrenzer (18, 18', 50a, 50b, 50c, 50d) vorhanden ist, insbesondere dass kein mechanischer Drehmomentbegrenzer (18, 18') abtriebsseitig eines von einer zentralen Antriebseinheit (12) bereitgestellten Stellenergie verzweigenden Verteilergetriebes (16) in der Transmission (17) vorhanden ist und/oder dass kein mechanischer Drehmomentbegrenzer (50a, 50b, 50c, 50d) in einer Laststation (22, 24, 32, 34) vorhanden ist.

4. Flugzeughochauftriebssystem (10) nach einem der vorhergehenden Ansprüche, **dadurch gekennzeichnet, dass** eine Auswerteeinheit (100) vorgesehen ist, die mit dem wenigstens einen Erfassungsmittel (110', 110") in Signalverbindung steht und mittels derer die Signale des Erfassungsmittels (110', 110") auswertbar sind, um den Betriebszustand zu ermitteln.

5. Flugzeughochauftriebssystem (10) nach Anspruch 4, **dadurch gekennzeichnet, dass** die Auswerteeinheit (100) eine zentrale Auswerteeinheit (100) ist, die mit sämtlichen Erfassungsmitteln (110a, 110b, 110c, 110d, 110', 110") des Flugzeughochauftriebssystems (10) in Signalverbindung steht.

6. Flugzeughochauftriebssystem (10) nach einem der vorhergehenden Ansprüche, **dadurch gekennzeichnet, dass** eine Laststation (22, 24, 32, 34) einen Stationsaktuator (60a, 60b, 60c, 60d) und eine Spindel (70a, 70b, 70c, 70d) mit einer Spindelmutter (80a, 80b, 80c, 80d) aufweist, wobei der Stationsaktuator (60a, 60b, 60c, 60d) das Stellmoment zu der Spindel (70a, 70b, 70c, 70d) überträgt sowie übersetzt und die Spindelmutter (80a, 80b, 80c, 80d) die rotatorische Bewegung in eine translatorische Bewegung für die Klappe (20, 30) wandelt, und dass ein Erfassungsmittel (110a, 110b, 110c, 110d) in der Laststation (22, 24, 32, 34) vor dem Stationsaktuator (60a, 60b, 60c, 60d) angeordnet ist.

7. Flugzeughochauftriebssystem (10) nach einem der vorhergehenden Ansprüche, **dadurch gekennzeichnet, dass** der Transmissionsabschnitt (42, 44, 46) ein Transmissionsabschnitt (42, 46) zwischen den Abzweiggetrieben (40a, 40b, 40c, 40d) zweier einer Klappe (20, 30) zugeordneter Laststationen (22, 24, 32, 34) ist.

8. Flugzeughochauftriebssystem (10) nach Anspruch 7, **dadurch gekennzeichnet, dass** mittels des in diesem Transmissionsabschnitt (42, 46) angeordneten Erfassungsmittels (110', 110") das dort anliegende Drehmoment und/oder der zeitliche Verlauf des Drehmoments ermittelbar ist.

9. Flugzeughochauftriebssystem (10) nach einem der Ansprüche 4 bis 8, **dadurch gekennzeichnet, dass** anhand der Überwachung des Verhältnisses der Lastanteile der Laststationen (22, 24, 32, 34) fehlerhafte Betriebszustände mittels der Auswerteeinheit (100) ermittelbar sind und/oder dass anhand der Überwachung und des paarweisen Vergleichs der anliegenden Stellkräfte an den Laststationen (22, 24, 32, 34) des linken und rechten Flügels des Flugzeugs fehlerhafte Betriebszustände mittels der Auswerteeinheit (100) ermittelbar sind und/oder dass unter Einbeziehung der aktuellen Werte für Flügelkonfiguration, des Flugzeuggewichts, der Fluggeschwindigkeit und/oder der Temperatur ein Sollwert für die anliegende Stellkraft an den Laststationen (22, 24, 32, 34) mittels der Auswerteeinheit (100) ermittelbar ist und dass anhand eines Abgleichs der ermittelten Istwerte mit den errechneten Sollwerten fehlerhafte Betriebszustände mittels der Auswerteeinheit (100) ermittelbar sind.

10. Flugzeughochauftriebssystem (10) nach Anspruch 9, **dadurch gekennzeichnet, dass** durch mittelbaren und/oder unmittelbaren Vergleich der Lastanteile zweier Laststationen (22, 24, 32, 34)
- ein Klemmfall in einer der Laststationen (22, 24, 32, 34) zweier einer Klappe (20, 30) zugeordneter Laststationen (22, 24, 32, 34) anhand eines ansteigenden Betriebsdrehmoments in der ersten der Klappe (20, 30) zugeordneten Laststation (22, 24, 32, 34) bei gleichbleibenden Betriebsdrehmoment der zweiten der Klappe (20, 30) zugeordneten Laststation (22, 24, 32, 34) und/oder
- eine Unterbrechung eines Lastpfades in einer ersten einer Klappe (20, 30) zugeordneten Laststation (22, 24, 32, 34) anhand des Anliegens der gesamten Last am intakten Lastpfad der zweiten der Klappe (20, 30) zugeordneten Laststation (22, 24, 32, 34) und/oder
- ein Schieflauf der Klappe (20, 30) nach einer Unterbrechung oder eines Sprunges im zeitlichen Verlauf des anliegenden Drehmoments in einer der Klappe (20, 30) zugeordneten Laststation (22, 24, 32, 34) und/oder
- eine Unterbrechung im Transmissionsabschnitt (42, 46) zwischen den Klappen (20, 30) anhand eines Drehmomentabfalls an beiden Laststationen (22, 24, 32, 34) unter Hinzuziehung wenigstens eines Signals von Positionsmessmitteln zur Ermittlung der Klappenstellung und/oder
- eine Unterbrechung des Transmissionsabschnitts (46) zwischen den Laststationen (32, 34) der äußeren Klappe (30) anhand der Reaktion der innenliegenden Laststation (32) und/oder
- eine Unterbrechung des Transmissionsabschnitts zwischen den Laststationen (22, 24) der inneren Klappe (20) anhand einer Änderung der Verhältnisses der Lastanteile der Laststationen (22, 24, 32, 34) der inneren und äußeren Klappe (20, 30)
mittels der Auswerteeinheit (100) ermittelbar ist.

11. Verfahren zur Ermittlung eines Betriebszustandes eines Flugzeughochauftriebssystems (10) mit wenigstens einer Laststation (22, 24, 32, 34) zur Ansteuerung einer Klappe (20, 30) eines Flügels, vorzugsweise Landeklappe und/oder Vorflügelklappe, und wenigstens einer Transmission (17) zur Übertragung von Stellenergie zu den Laststationen (22, 24, 32, 34)
**dadurch gekennzeichnet,**
**dass** anhand des an der Transmission (17) anliegenden Drehmoments und/oder der zeitlichen Verlaufs des Drehmoments mittelbar und/oder unmittelbar der Betriebszustand des Flugzeughochauftriebssystems (10) ermittelt wird.

12. Verfahren zur Ermittlung eines Betriebszustandes eines Flugzeughochauftriebssystems (10) nach Anspruch 11, **dadurch gekennzeichnet, dass** anhand der Überwachung und des paarweisen Vergleichs der anliegenden Stellkräfte an den Laststationen (22, 24, 32, 34) des linken und rechten Flügels des Flugzeugs fehlerhafte Betriebszustände und/oder dass unter Einbeziehung der aktuellen Werte für die Flügelkonfiguration, des Flugzeuggewichts, der Fluggeschwindigkeit und/oder der Temperatur ein Sollwert für die anliegende Stellkraft an den Laststationen (22, 24, 32, 34) ermittelt werden und dass anhand eines Abgleichs der ermittelten Istwerte mit den errechneten Sollwerten fehlerhafte Betriebszustände ermittelt werden.

13. Verfahren zur Ermittlung eines Betriebszustandes eines Flugzeughochauftriebssystems (10) nach Anspruch 11 oder 12, **dadurch gekennzeichnet**, anhand der Überwachung des Verhältnisses der Lastanteile der Laststationen (22, 24, 32, 34) fehlerhafte Betriebszustände ermittelt werden.

14. Verfahren zur Ermittlung eines Betriebszustandes eines Flugzeughochauftriebssystems (10) nach Anspruch 13, **dadurch gekennzeichnet, dass** durch mittelbaren und/oder unmittelbaren Vergleich der Lastanteile zweier Laststationen (22, 24, 32, 34)
- ein Klemmfall in einer der Laststationen (22, 24, 32, 34) zweier einer Klappe (20, 30) zugeordneter Laststationen (22, 24, 32, 34) anhand eines ansteigenden Betriebsdrehmoments in der ersten der Klappe (20, 30) zugeordneten Laststation (22, 24, 32, 34) bei gleichbleibenden Betriebsdrehmoment der zweiten der Klappe (20, 30) zugeordneten Laststation (22, 24, 32, 34) und/oder
- eine Unterbrechung eines Lastpfades in einer ersten einer Klappe (20, 30) zugeordneten Laststation (22, 24, 32, 34) anhand des Anliegens der gesamten Last am intakten Lastpfad der zweiten der Klappe (20, 30) zugeordneten Laststation (22, 24, 32, 34) und/oder
- ein Schieflauf der Klappe (20, 30) nach einer Unterbrechung oder eines Sprunges im zeitlichen Verlauf des anliegenden Drehmoments in einer der Klappe (20, 30) zugeordneten Laststation (22, 24, 32, 34) und/oder
- eine Unterbrechung im Transmissionsabschnitt (42, 46) zwischen den Klappen (20, 30) anhand eines Drehmomentabfalls an beiden Laststationen (22, 24, 32, 34) unter Hinzuziehung wenigstens eines Signals von Positionsmessmitteln zur Ermittlung der Klappenstellung und/oder
- eine Unterbrechung des Transmissionsabschnitts (46) zwischen den Laststationen (32, 34) der äußeren Klappe (30) anhand der Reaktion der innenliegenden Laststation (32) und/oder
- eine Unterbrechung des Transmissionsabschnitts zwischen den Laststationen (22, 24) der inneren Klappe (20) anhand einer Änderung der Verhältnisses der Lastanteile der Laststationen (22, 24, 32, 34) der inneren und äußeren Klappe (20, 30)
ermittelt wird.

15. Verfahren zur Ermittlung eines Betriebszustandes eines Flugzeughochauftriebssystems (10) nach einem der Ansprüche 11 bis 14, **dadurch gekennzeichnet, dass** das Verfahren mit einem Flugzeughochauftriebssystem (10) nach einem der Ansprüche 1 bis 10 durchgeführt wird.

## Claims

1. An aircraft high lift system (10) with at least one load station (22, 24, 32, 34) for actuating a flap (20, 30) of a wing, preferably a landing flap and/or a leading-edge flap, and at least one transmission (17) with transmission portions (42, 44, 46), which are disposed between branch transmissions (40a, 40b, 40c, 40d), wherein by means of the branch transmissions (40a, 40b, 40c, 40d) actuating energy can be branched off from the transmission (17) to the load station (22, 24, 32, 34),
**characterized in that**
at least one detection means (110', 110") is arranged in a transmission portion (42, 46), by means of which an operating condition of the transmission (17) and/or the load station (22, 24, 32, 34) can directly and/or indirectly be determined, wherein by means of the detection means (110', 110") the torque applied and/or the time course of the torque can be detected.

2. The aircraft high lift system (10) according to claim 1, **characterized in that** the detection means (110', 110") is a torque sensor.

3. The aircraft high lift system (10) according to claim 1 or 2, **characterized in that** no mechanical torque limiter (18, 18', 50a, 50b, 50c, 50d) is present, in particular that no mechanical torque limiter (18, 18') is present in the transmission (17) on the output side of a transfer gear (16) branching off actuating energy provided by a central drive unit (12) and/or that no mechanical torque limiter (50a, 50b, 50c, 50d) is present in a load station (22, 24, 32, 34).

4. The aircraft high lift system (10) according to any of the preceding claims, **characterized in that** an evaluation unit (100) is provided, which has a signal connection with the at least one detection means (110', 110") and by means of which the signals of the detection means (110', 110") can be evaluated, in order to determine the operating condition.

5. The aircraft high lift system (10) according to claim 4, **characterized in that** the evaluation unit (100) is a central evaluation unit (100), which has a signal connection with all detection means (110', 110") of the aircraft high lift system (10).

6. The aircraft high lift system (10) according to any of the preceding claims, **characterized in that** a load station (22, 24, 32, 34) includes a station actuator (60a, 60b, 60c, 60d) and a spindle (70a, 70b, 70c, 70d) with a spindle nut (80a, 80b, 80c, 80d), wherein the station actuator (60a, 60b, 60c, 60d) transmits and translates the actuating torque to the spindle (70a, 70b, 70c, 70d) and the spindle nut (80a, 80b, 80c, 80d) converts the rotatory movement into a translational movement for the flap (20, 30), and that a detection means (110a, 110b, 110c, 110d) in the load station (22, 24, 32, 34) is arranged before the station actuator (60a, 60b, 60c, 60d).

7. The aircraft high lift system (10) according to any of the preceding claims, **characterized in that** the transmission portion (42, 44, 46) is a transmission portion (42, 46) between the branch transmissions (40a, 40b, 40c, 40d) of two load stations (22, 24, 32, 34) associated to a flap (20, 30).

8. The aircraft high lift system (10) according to claim 7, **characterized in that** by means of the detection means (110', 110") arranged in this transmission portion (42, 46) the torque applied there and/or the time course of the torque can be determined.

9. The aircraft high lift system (10) according to any of claims 4 to 8, **characterized in that** by monitoring the ratio of the load components of the load stations (22, 24, 32, 34) faulty operating conditions can be determined by means of the evaluation unit (100) and/or that by monitoring and comparing pairs of the actuating forces applied at the load stations (22, 24, 32, 34) of the left and right wing of the aircraft faulty operating conditions can be determined by means of the evaluation unit (100) and/or that by including the current values for wing configuration, the aircraft weight, the airspeed and/or the temperature, a desired value for the actuating force applied at the load stations (22, 24, 32, 34) can be determined by means of the evaluation unit (100), and that by matching the actual values determined with the calculated desired values faulty operating conditions can be determined by means of the evaluation unit (100).

10. The aircraft high lift system (10) according to claim 9, **characterized in that** by direct and/or indirect comparison of the load components of two load stations (22, 24, 32, 34)
- a jamming case in one of the load stations (22, 24, 32, 34) of two load stations (22, 24, 32, 34) associated to a flap (20, 30) can be determined by means of a rising operating torque in the first load station (22, 24, 32, 34) associated to the flap (20, 30) with constant operating torque of the second load station (22, 24, 32, 34) associated to the flap (20, 30), and/or
- an interruption of a load path in a first load station (22, 24, 32, 34) associated to a flap (20, 30) can be determined by means of the presence of the entire load on the intact load path of the second load station (22, 24, 32, 34) associated to the flap (20, 30), and/or
- a skewing of the flap (20, 30) after an interruption or a jump in the time course of the applied torque in a load station (22, 24, 32, 34) associated to the flap (20, 30) can be determined, and/or
- an interruption in the transmission portion (42, 46) between the flaps (20, 30) can be determined by means of a torque decrease at both load stations (22, 24, 32, 34) by using at least one signal from position measuring means for determining the flap position, and/or
- an interruption of the transmission portion (46) between the load stations (32, 34) of the outer flap (30) can be determined by means of the reaction of the inner load station (32), and/or
- an interruption of the transmission portion between the load stations (22, 24) of the inner flap (20) can be determined by means of a change in the ratios of the load components of the load stations (22, 24, 32, 34) of the inner and outer flap (20, 30)
by means of the evaluation unit (100).

11. A method for determining an operating condition of an aircraft high lift system (10) with at least one load station (22, 24, 32, 34) for actuating a flap (20, 30) of a wing, preferably a landing flap and/or leading-edge flap, and at least one transmission (17) for transmitting actuating energy to the load stations (22, 24, 32, 34),
**characterized in that**
the operating condition of the aircraft high lift system (10) is determined directly and/or indirectly by means of the torque applied to the transmission (17) and/or the time course of the torque.

12. A method for determining an operating condition of an aircraft high lift system (10) according to claim 11, **characterized in that** by monitoring and comparing pairs of the actuating forces applied at the load stations (22, 24, 32, 34) of the left and right wing of the aircraft faulty operating conditions are determined and/or that by including the current values for wing configuration, the aircraft weight, the airspeed and/or the temperature, a desired value for the actuating force applied at the load stations (22, 24, 32, 34) is determined, and that by matching the actual values determined with the calculated desired values, faulty operating conditions are determined.

13. The method for determining an operating condition of an aircraft high lift system (10) according to claim 11 or 12, **characterized in that** by monitoring the ratio of the load components of the load stations (22, 24, 32, 34), faulty operating conditions are determined.

14. The method for determining an operating condition of an aircraft high lift system (10) according to claim 13, **characterized in that** by direct and/or indirect comparison of the load components of two load stations (22, 24, 32, 34)
- a jamming case in one of the load stations (22, 24, 32, 34) of two load stations (22, 24, 32, 34) associated to a flap (20, 30) is determined by means of a rising operating torque in the first load station (22, 24, 32, 34) associated to the flap (20, 30) with constant operating torque of the second load station (22, 24, 32, 34) associated to the flap (20, 30), and/or
- an interruption of a load path in a first load station (22, 24, 32, 34) associated to a flap (20, 30) is determined by means of the presence of the entire load on the intact load path of the second load station (22, 24, 32, 34) associated to the flap (20, 30), and/or
- a skewing of the flap (20, 30) after an interruption or a jump in the time course of the applied torque in a load station (22, 24, 32, 34) associated to the flap (20, 30) is determined, and/or
- an interruption in the transmission portion (42, 46) between the flaps (20, 30) is determined by means of a torque decrease at both load stations (22, 24, 32, 34) by using at least one signal from position measuring means for determining the flap position, and/or
- an interruption of the transmission portion (46) between the load stations (32, 34) of the outer flap (30) is determined by means of the reaction of the inner load station (32), and/or
- an interruption of the transmission portion between the load stations (22, 24) of the inner flap (20) is determined by means of a change in the ratios of the load components of the load stations (22, 24, 32, 34) of the inner and outer flap (20, 30).

15. The method for determining an operating condition of an aircraft high lift system (10) according to any of claims 11 to 14, **characterized in that** the method is performed with an aircraft high lift system (10) according to any of claims 1 to 10.

## Revendications

1. Système d'hypersustentation d'aéronef (10) équipé au moins d'une sous-station (22, 24, 32, 34) pour actionner un volet (20, 30) d'une aile, de préférence un volet d'atterrissage et/ou un bec de bord d'attaque, et au moins d'une transmission (17) avec des sections de transmission (42, 44, 46) qui se trouvent entre les boîtes de dérivation (40a, 40b, 40c, 40d), de l'énergie de réglage pouvant être dérivée au moyen des boîtes de dérivation (40a, 40b, 40c, 40d) de la transmission (17) à la sous-station (22, 24, 32, 34),
**caractérisé en ce**
**qu'**au moins un dispositif de détection (110', 110") est placé dans une section de transmission (42, 46) au moyen duquel un état de fonctionnement de la transmission (17) et/ou de la sous-station (22, 24, 32, 34) peut être déterminé indirectement et/ou directement, le couple appliqué et/ou la courbe d'évolution dans le temps du couple pouvant être détecté(e-s) au moyen du dispositif de détection (110', 110").

2. Système d'hypersustentation d'aéronef (10) selon la revendication 1, **caractérisé en ce que** le dispositif de détection (110', 110") est un capteur de couple.

3. Système d'hypersustentation d'aéronef (10) selon la revendication 1 ou 2, **caractérisé en ce qu'**aucun limiteur de couple (18, 18', 50a, 50b, 50c, 50d) mécanique n'est disponible, en particulier **en ce qu'**aucun limiteur de couple (18, 18') mécanique n'est disponible côté sortie d'une énergie de réglage de la boîtier de transfert dérivée (16) fournie par une unité motrice centrale et/ou **en ce qu'**aucun limiteur de couple mécanique (50a, 50b, 50c, 50d) n'est disponible dans une sous-station (22, 24, 32, 34).

4. Système d'hypersustentation d'aéronef (10) selon l'une quelconque des revendications précédentes, **caractérisé en ce qu'**une unité d'évaluation (100) est prévue avec laquelle au moins un dispositif de détection (110', 110") communique par des signaux et au moyen de laquelle les signaux du dispositif de détection (110', 110") peuvent être évalués afin de déterminer l'état de fonctionnement.

5. Système d'hypersustentation d'aéronef (10) selon la revendication 4, **caractérisé en ce que** l'unité d'évaluation (100) est une unité d'évaluation (100) centrale qui communique par des signaux avec l'ensemble des dispositifs de détection (110a, 110b, 110c, 110d, 110', 110") du système d'hypersustentation d'aéronef (10).

6. Système d'hypersustentation d'aéronef (10) selon l'une quelconque des revendications précédentes, **caractérisé en ce qu'**une sous-station (22, 24, 32, 34) comporte un actionneur de station (60a, 60b, 60c, 60d) et une tige (70a, 70b, 70c, 70d) avec un écrou à tige (80a, 80b, 80c, 80d), ledit actionneur de station (60a, 60b, 60c, 60d) transférant et transmettant le couple de réglage à la tige (70a, 70b, 70c, 70d) et l'écrou à tige (80a, 80b, 80c, 80d) transformant le mouvement de rotation en un mouvement de translation pour le volet (20, 30), et **en ce que** le dispositif de détection (110a, 110b, 110c, 110d) est disposé dans la sous-station (22, 24, 32, 34) devant l'actionneur de station (60a, 60b, 60c, 60d).

7. Système d'hypersustentation d'aéronef (10) selon l'une quelconque des revendications précédentes, **caractérisé en ce que** la section de transmission (42, 44, 46) est une section de transmission (42, 46) entre les boîtes de dérivation (40a, 40b, 40c, 40d) de deux sous-stations (22, 24, 32, 34) assignées à un volet (20, 30).

8. Système d'hypersustentation d'aéronef (10) selon la revendication 7, **caractérisé en ce qu'**au moyen du dispositif de détection (110', 110") disposé dans cette section de transmission (42, 46) le couple qui y est appliqué et/ou la courbe d'évolution dans le temps du couple peut ou peuvent être déterminé(e-s).

9. Système d'hypersustentation d'aéronef (10) selon l'une des revendications 4 à 8, **caractérisé en ce que** des états de fonctionnement défaillants peuvent être détectés au moyen de l'unité d'évaluation (100) à l'aide d'une surveillance du rapport des parts de charge des sous-stations (22, 24, 32, 34) et/ou **en ce que** des états de fonctionnement défaillants peuvent être détectés au moyen de l'unité d'évaluation (100) à l'aide d'une surveillance et d'une comparaison par paires des forces de réglage appliquées aux sous-stations (22, 24, 32, 34) de l'aile gauche et droite de l'avion et/ou **en ce qu'**une valeur de consigne pour la force de réglage appliquée aux sous-stations (22, 24, 32, 34) peut être déterminée au moyen de l'unité d'évaluation (100) en prenant en compte les valeurs actuelles pour la configuration de l'aile, le poids de l'avion, la vitesse de vol et/ou la température et **en ce que** des états de fonctionnement défaillants peuvent être déterminés au moyen de l'unité d'évaluation (100) à l'aide d'une comparaison des valeurs réelles déterminées avec les valeurs de consigne calculées,.

10. Système d'hypersustentation d'aéronef (10) selon la revendication 9, **caractérisé en ce que**, par une comparaison indirecte et/ou directe des parts de charge de deux sous-stations (22, 24, 32, 34), il est possible de déterminer au moyen de l'unité d'évaluation (100)
- un blocage dans l'une des sous-stations (22, 24, 32, 34) de deux sous-stations (22, 24, 32, 34) assignées à un volet (20, 30) à l'aide d'un couple de fonctionnement croissant dans la première sous-station (22, 24, 32, 34) assignée au volet (20, 30) avec un couple de fonctionnement constant de la deuxième sous-station (22, 24, 32, 34) assignée au volet (20, 30) et/ou
- une interruption d'un chemin de charge dans une première sous-station (22, 24, 32, 34) assignée à un volet (20, 30) à l'aide de l'application de la totalité de la charge sur le chemin de charge intact de la deuxième sous-station (22, 24, 32, 34) assignée au volet (20, 30) et/ou
- un biaisement du volet (20, 30) après une interruption ou un saut dans la courbe d'évolution dans le temps du couple appliqué dans l'une des sous-stations (22, 24, 32, 34) assignées au volet (20, 30) et/ou
- une interruption dans la section de transmission (42, 46) entre les volets (20, 30) à l'aide d'une chute du couple aux deux sous-stations (22, 24, 32, 34) en faisant appel à au moins un signal de dispositifs de mesure de positionnement pour déterminer la position du volet et/ou
- une interruption de la section de transmission (46) entre les sous-stations (32, 34) du volet (30) extérieur à l'aide de la réaction de la sous-station (32) intérieure et/ou
- une interruption de la section de transmission entre les sous-stations (22, 24) du volet (20) intérieur à l'aide d'une modification du rapport des parts de charge des sous-stations (22, 24, 32, 34) du volet intérieur et du volet extérieur (20, 30).

11. Procédé de détermination d'un état de fonctionnement d'un système d'hypersustentation d'aéronef (10) équipé au moins d'une sous-station (22, 24, 32, 34) pour actionner un volet (20, 30) d'une aile, de préférence un volet d'atterrissage et/ou un bec de bord d'attaque, et au moins d'une transmission (17) pour transmettre l'énergie de réglage aux sous-stations (22, 24, 32, 34),
**caractérisé en ce que**
l'état de fonctionnement du système d'hypersustentation d'aéronef (10) est déterminé indirectement et/ou directement à l'aide du couple appliqué sur la transmission (17) et/ou de la courbe d'évolution dans le temps du couple.

12. Procédé de détermination d'un état de fonctionnement d'un système d'hypersustentation d'aéronef (10) selon la revendication 11, **caractérisé en ce que** des états de fonctionnement défaillants sont détectés à l'aide d'une surveillance et d'une comparaison par paires des forces de réglage appliquées aux sous-stations (22, 24, 32, 34) de l'aile gauche et droite de l'avion et/ou **en ce qu'**une valeur de consigne pour la force de réglage appliquée aux sous-stations (22, 24, 32, 34) est définie en prenant en compte les valeurs actuelles pour la configuration de l'aile, le poids de l'aéronef, la vitesse de vol et/ou la température et **en ce que** des états de fonctionnement défaillants sont définis à l'aide d'une comparaison des valeurs réelles déterminées avec les valeurs de consigne calculées.

13. Procédé de détermination d'un état de fonctionnement d'un système d'hypersustentation d'aéronef (10) selon la revendication 11 ou 12, **caractérisé en ce que** des états de fonctionnement défaillants sont déterminés à l'aide d'une surveillance du rapport des parts de charge des sous-stations (22, 24, 32, 34).

14. Procédé de détermination d'un état de fonctionnement d'un système d'hypersustentation d'aéronef (10) selon la revendication 13, **caractérisé en ce que**, par une comparaison indirecte et/ou directe des parts de charge de deux sous-stations (22, 24, 32, 34), on détermine
- un blocage dans l'une des sous-stations (22, 24, 32, 34) de deux sous-stations (22, 24, 32, 34) assignées à un volet (20, 30) à l'aide d'un couple de fonctionnement croissant dans la première sous-station (22, 24, 32, 34) assignée au volet (20, 30) avec un couple de fonctionnement constant de la deuxième sous-station (22, 24, 32, 34) assignée au volet (20, 30) et/ou
- une interruption d'un chemin de charge dans une première sous-station (22, 24, 32, 34) assignée à un volet (20, 30) à l'aide de l'application de la totalité de la charge sur le chemin de charge intact de la deuxième sous-station (22, 24, 32, 34) assignée au volet (20, 30) et/ou
- un biaisement du volet (20, 30) après une interruption ou un saut dans la courbe d'évolution dans le temps du couple appliqué dans l'une des sous-stations (22, 24, 32, 34) assignées au volet (20, 30) et/ou
- une interruption dans la section de transmission (42, 46) entre les volets (20, 30) à l'aide d'une chute du couple aux deux sous-stations (22, 24, 32, 34) en faisant appel à au moins un signal de dispositifs de mesure de positionnement pour déterminer la position du volet et/ou
- une interruption de la section de transmission (46) entre les sous-stations (32, 34) du volet (30) extérieur à l'aide de la réaction de la sous-station (32) intérieure et/ou
- une interruption de la section de transmission entre les sous-stations (22, 24) du volet (20) intérieur à l'aide d'une modification du rapport des parts de charge des sous-stations (22, 24, 32, 34) du volet intérieur et du volet extérieur (20, 30).

15. Procédé de détermination d'un état de fonctionnement d'un système d'hypersustentation d'aéronef (10) selon l'une quelconque des revendications 11 à 14, **caractérisé en ce que** le procédé est exécuté avec un système d'hypersustentation d'aéronef (10) selon l'une quelconque des revendications 1 à 10.
